# EUROPEAN PATENT APPLICATION

(11) **EP 1 729 490 A1**
(43) Date of publication of application: **06.12.2006**
(21) Application number: 06252830.2
(22) Date of filing: 01.06.2006
(51) Int. Cl.: H04M 3/51

(54) **Method and device for providing a parallel voice and data connection with a call center**

(30) Priority: 02.06.2005 US 143803
(71) Applicant: Agere Systems, Inc., Allentown, PA 18109 (US)
(72) Inventor: Landschaft, Assaf, Munich, 80538 (DE); Wohlstadter, Gal, Munich, 81669 (DE); Wohlstadter, Gil, Givataim, 53444 (DE)
(74) Representative: Williams, David John

(57) **Abstract**

Introduced is method of establishing communications between a call center (410,450) and a user of a voice communications device (10), wherein parallel voice and data connections are established. In one embodiment of the method, a voice connection between a communication device and a call center is established (510) and, parallel thereto, a data connection between the communications device and a data server (420) is also established (530). By giving the call center access to the data server at the same time the user has access call center support is enhanced. The method permits the call center to be responsive to user inquiries at the same time the user is on line with the data server (540,550). For example, if the reason a user is in contact with the call center is to complete an application for insurance, the call center can provide verbal assistance to the user at the same time the user is completing an application form furnished by the data server.

## Description

### TECHNICAL FIELD OF THE INVENTION

The present invention is directed, in general, to a call center communication system in general, and, more specifically to a method for establishing parallel voice and data communications between a call center and a user of a communications device, especially a mobile communications device.

### BACKGROUND OF THE INVENTION

The general increase in Internet usage has inspired also companies to increase their utilization of web applications, including applications for communicating with customers and potential customers. The use of email has become a standard form of communications in the business world. In addition to communicating day to day business items, email is also being used to process a number of business transactions that formerly required face-to-face interaction or the use of a the postal service to exchange forms and other communications. All kinds of business forms are now being handled by email. In addition business forms are now being generated from business web sites to do such things as placing and receiving orders for products, filling prescriptions, ordering tickets, and so on. In addition to simple business forms, many the online users are using more complicated HTML or xHTML forms to communicate with clients.

Because of the complexity of many business transactions, some of the forms in use are, of necessity, quite complicated and are often quite lengthy. To respond to the need to make the completion of electronic forms easier and more user a method and apparatus to assist the customer or client in completing electronic forms is described in PCT Patent Application No. WO 00/42540, entitled METHOD AND APPARATUS FOR CLIENT SIDE AUTOMATIC FORM COMPLETION, Markus, Matthew A., et *al.* (Markus). Markus describes a method and apparatus for electronic form completion by customer or client. Markus describes the use of a remote personal information server that registers and stores user data and then delivers this user data in an executable code module to any browser where the user may be located. The method disclosed in Markus is, however, limited to the automatically filling in of a user's preregistered personal data.

While completing a complicated form, like an insurance policy application or a mortgage application, frequently data is requested from the party completing the form that he or she is not prepared to answer because the question was unexpected or the answer may require explanation. This makes many users feel they need more information before they can complete the form and, as a result they cease working on the online form and request a meeting with someone to assist them in completing the form. Companies have obvious financial reasons for increasing the probability that a customer or potential customer will complete an online form once he or she starts it. Certain current studies or surveys show that only a very small percentage of people starting an online form actually complete it. Thus, many people who are customers or potential customers of a business prefer to complete necessary forms or furnish the information to complete a form or application by talking to a real person. This is why businesses, such a banks, insurance companies, and mortgage companies, have call centers. One purpose of the call center is to assist the customers or potential customers of the business in completing the paperwork inherent in the applicable business. It is easier for most people to conduct a transaction via a call center than to conduct the same transaction using an electronically provided web page form. However, when it comes to filling out a very complicated form, even the call center option is limited.

Accordingly, what is needed in the art is improved approach to handle call center support, especially when the call center is called from a mobile communication device, and to provide better ways to provide user support in completing online forms provided by a web site.

### SUMMARY OF THE INVENTION

To address the above-discussed deficiencies of the prior art, the present invention provides for an improved method of contact between a user of a voice communications device and a call center. In one embodiment of the invention the method is comprised of (1) establishing a voice connection between a call center and a communications device; and (2) establishing a data connection, parallel to the voice connection, between the communications device and a data server accessible to the call center.

The present invention thus advantageously enables the combination of call center support and web browsing in order to provide assistance to a user of the call center. From the viewpoint of a normal user of the communication device, the method at first appears to provide normal call center support. The new functionality, however, lies in the additional option for a user to combine guided web browsing with the normal call center support. In one embodiment the data server is preferably connected to the Internet, which can be reached by the communications device. In order for the call center to provide appropriate guidance to a user browsing through the server's web pages, the call center monitors the data exchanged during the course of the data connection between the communication device and the web server. If at any time the user needs assistance with the information furnished by the data server, the web server will be able to immediately provide such assistance, without having to sign off from the data network.

In one embodiment of the invention, the call center monitors the data exchanged in the data connection. In a particularly useful embodiment of the invention, the data server is a web server connected to the Internet.

In another embodiment of the invention, the method provides for the storing of pre-recorded voice messages that will automatically transmit over the voice connection in response to a voice or key command input by a user of the communications device.

A beneficial embodiment of the invention provides for the voice connection and the data connection, or both, to be established via a GSM and/or UMTS communications network supporting GPRS and/or HSCSD and/or EDGE standards.

In one embodiment the data connection is initiated by the data server. In another embodiment the data connection is initiated by the communications device. In still another embodiment the data connection is initiated by the communications device in response to a message from the call center or from the data server.

One embodiment of the invention provides for the communication device to be selected from the group consisting of a mobile phone, a PDA, an MDA, a Pocket PC and a Tablet PC. Yet still another embodiment provides for the data server transmitting data to the communications device, where the data has WML, XHTML and/or HTML format. A particularly useful embodiment of the invention provides for the data server to transmit an online form to the communications device so that the form can be completed by a user of the communications device. The invention also provides for an embodiment where the communications device transmits data to the data server to cause at least one voice message to be transmitted to the communications device. The invention also includes a beneficial feature in one embodiment that provides for the communications device to transmit data to the data server to signal the call center that the user of the communications device requests a call center person to join the voice connection. Another embodiment provides for a person located at the call center to join the voice connection. In a particularly useful embodiment the method wherein the voice connection and a data connection is established are embodied in a sequence of software instructions.

The invention also provides for a communications system that comprises, in one embodiment, (1)a communications device; a data server; and a call center unit consisting of at least one computer and one communications terminal, wherein (i) the communications device is connected via a voice connection to the communications terminal; (ii) the communications device is connected via a first data connection to the data server; and (iii) the computer is connected via a second data connection to the data server. An aspect of this embodiment provides for the communications device to be a mobile communications device.

The invention also provides for a communications device comprised of a voice connection means; and a data connection means, where the communications device is adapted to handle, in parallel, at least one voice connection and at least one data connection. A useful aspect of this embodiment provides for the communications device to be a mobile communications device.

One embodiment of the invention, provides for a data server controller, which has a digital storage medium containing electronically readable control instructions for a data server; and a command means for directing a data server associated with the digital storage medium to execute a process consisting of (i) establishing a data connection with a communications device in response to a request from a call center; (ii) exchanging data with the communications device; and (iii) forwarding data received from the communications device to the call center.

Another embodiment of the invention provides for a communications device controller, comprising; (1) a digital storage medium containing electronically readable control instructions for a communications device; and a command means for directing a communications device associated with the digital storage medium to execute a process consisting of (i) establishing a voice connection with a call center; (ii) and establishing a data connection with a data server parallel to the voice connection.

The foregoing has outlined preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention.

### BRIEF DESCRIPTION OF THE DRAWINGS

For a more complete understanding of the invention, reference is now made to the following descriptions taken in conjunction with the accompanying drawing, in which:
FIGURE 1 illustrates a block diagram of a high level view an embodiment of a communication system constructed in accordance with the present invention; and
FIGURE 2 illustrates a flow chart of an embodiment of the invention wherein parallel communication is established between a mobile communications device and a call center in accordance with one embodiment of the invention.

### DETAILED DESCRIPTION

Before describing the FIGUREs directly, various aspects, embodiments and features of the present invention will be described. Accordingly, the invention proposes a method for communicating with a call center by establishing a voice connection between a communication device and a call center, while also establishing, parallel to the voice connection, a data connection between the communication device and a data server that is also connected to the call center. The present invention is particularly useful in those cases where the communication device is a mobile communication device, such as, without being limited to, a mobile phone, a PDA, an MDA, a Pocket PC and a Tablet PC.

The voice connection between the communication device and the call center is preferably handled so that it is at least partially automatic. This is done by the call center having pre-recorded voice messages stored so that the call center can transmit the appropriate voice message when requested by a voice cue or a by a cue generated by the user of the communications device.

In one embodiment, the voice and data connections can be established by the communication device via a GSM and/or UMTS communication network, especially if the network supports GPRS and/or HSCSD and/or EDGE standards. However, in addition to these types of wireless networks and formats, any other suitable networks and formats can be used and still be within the intended scope of the present invention.

The voice connection with the call center is typically first established by a user of the communications device calling the call center with the data connection established after the voice connection has been established. After both connections are made, the two connections are then operated in parallel.

There are several alternatives for establishing the data connection. One alternative is for the data connection to be initiated by the data server, such as, for example, utilizing a GPRS based push service. Another alternative is for the user to initiate the data connection from the communications device. Still another alternative is to initiate the data connection with the communications device responding to a message from the call center or data server, such as a message utilizing SMS. The data transmitted from the data server, which may be a web server, to the communication device will be in WML, xHTML and/or HTML format. In a particularly useful embodiment of the invention, the method provides for an online form to be sent from the data server to the user of the communication device so that he or she can complete it.

A principal advantage of the present invention is that it permits the user of the communication device, who is completing an online form or browsing other web content provided by way of the data connection, seek an explanation or assistance over the voice connection. In the case of an explanation or assistance that is in the category of frequently asked questions or it is assistance generally requested by other users at a specific point in the completion of a form or other document, the present method includes the provision of oral assistance by way of a pre-recorded message. This assistance can be requested by way of a verbal request by the communications device user or by the user pressing the appropriate key on the device. This cue will be transmitted from the communications device to the data server, which will cause at least one voice message to be transmitted to the communication device via the voice connection. These pre-recorded voice messages can be stored at the call center for the purpose of explaining frequently encountered problems in the online forms provided by the data server.

In those situations where the user of the communication device encounters a problem for which no pre-recorded voice message explanation is provided or if the automatically generated explanation is insufficient, the method also provides that a live support request can be transmitted from the communication device to the data server to signal the call center that a user has requested the call center to provide a live person to join in on the voice connection thereby enabling direct contact between a support team member and the user.

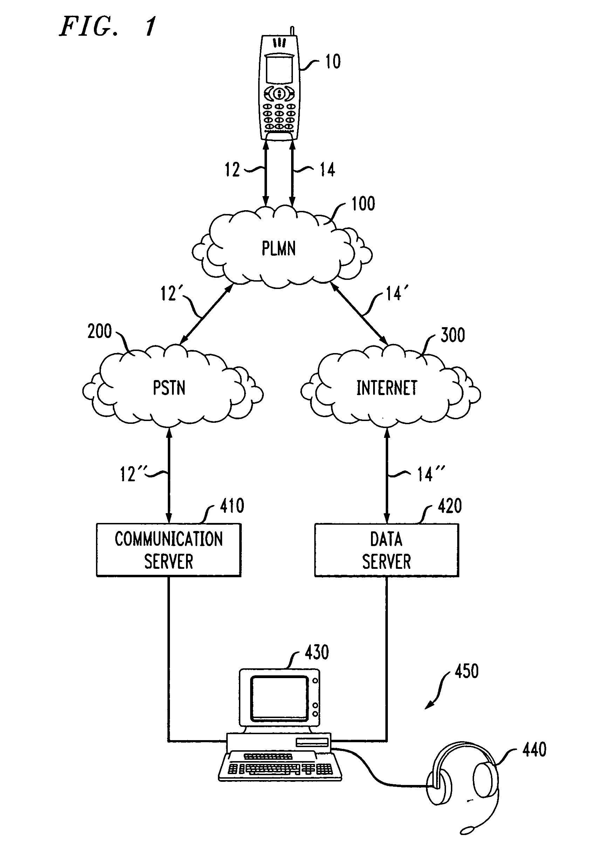

The invention will now be explained in more detail be reference to the FIGUREs. Turning initially to FIGURE 1, illustrated is a block diagram of a high level view an embodiment of a communication system constructed in accordance with the present invention. Shown is a mobile phone 10, which is adapted for use in a GSM network and supports the GPRS standard. The mobile phone 10 is capable of establishing two parallel connections to the GSM network (PLMN) 100, comprising a voice connection 12 and a data connection 14. By means of the voice connection indicated by reference numbers 12, 12' and 12'' the mobile phone 10 is connectable to a communication server 410 via the Public Switched Telephone Network (PSTN) 200, which is connected to the GSM network 100. In addition, the mobile phone 10 is connectable to data server 420 by means of the data connection indicated by reference numbers 14, 14' and 14'' via the Internet 300, wherein data server 420 is provided as a web server. The GSM network 100 also has access to the Internet 300.

The functionality of combined call center support and guided web browsing is controlled by a call center unit 450, which in this embodiment is made up of a communications computer 430 connected to a communications server 410, as well as to the data server 420. The communications computer 430 is capable of simultaneously handling voice and data connections. For the purpose of voice call handling the communication computer 430 is provided with a headset 440 connected thereto.

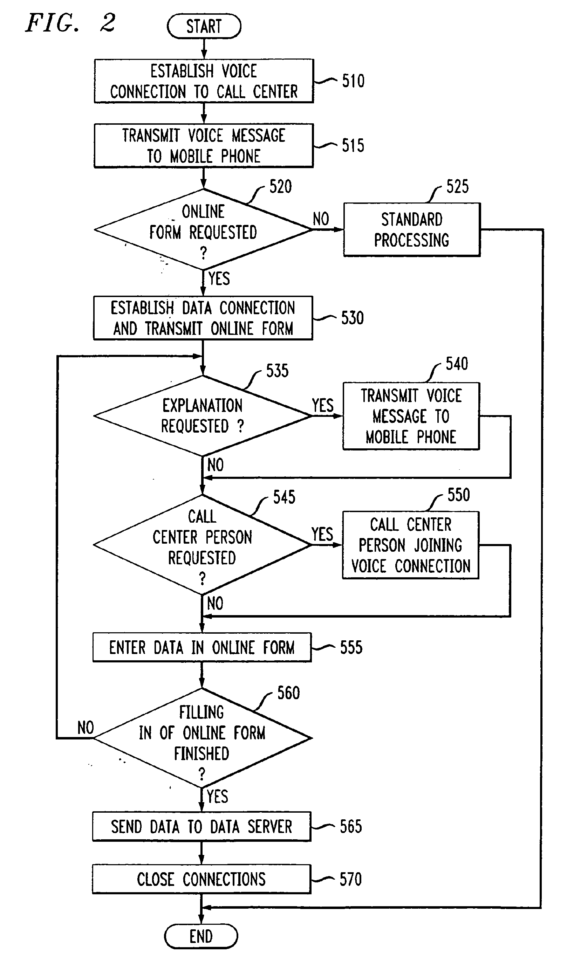

Turning now to FIGURE 2, illustrated a flow chart of an embodiment of the invention wherein parallel communication is established between a mobile communications device and a call center in accordance with one embodiment of the invention. This embodiment will be described in the context of the mobile communications device being a mobile phone. The embodiment commences with a start step 505. The user calls the call center from his mobile phone 10, thereby establishing a voice connection to the call center 510. The call center is usually partially automatic and accordingly transmits a pre-recorded voice message to the mobile phone 515. At this point the user typically is provided with different options on how to proceed, one of which is requesting web access, which can, in turn and in this instance, provide access to an online form. If the call center represents an insurance company, for example, the user may now hear the message "press 2 for insurance details". If web access is not requested 520, the call is processed according to the standard call center procedures 525. If however the user requests web access 520 by voice input or by pressing a key associated with such a request, a data connection to the mobile phone is established from a web server, associated with or connected to the call center. If a form is now requested, the form can be transmitted to the mobile phone 530 by sending a web page using GPRS. In the instant situation, when the user presses "2" an insurance company web page is transmitted to the mobile phone 10 and opens in the browser. Alternatively, the web page could also be provided via SMS or any other GSM protocol. The format of the web page can be in HTML, xHTML, WML or any other suitable format supported by the receiving mobile phone 10 or other communications device.

While completing the online form received via the parallel established data connection, the data server is accessible by the call center and the call center can monitor the form. Throughout the process of completing the online form, the user is also connected to the call center via a voice connection, just like in a regular call center voice connection.

If, in the course of completing the online form, the user of the mobile phone needs help or guidance, he or she has the option of requesting an explanation 535, which willing in the transmission of the appropriate pre-recorded voice message to the mobile phone 540, or of requesting a person from the call center 545 to join the voice connection 550. This embodiment can be implemented, for example, by having every problematic issue in the form supporting two buttons, the first associated with the function of "listen to explanation" to invoke a pre-recorded voice message from the call center with an explanation, and the second associated with the function of "get live support", which will result in a member of the call center team joining the call and providing assistance. In addition to live verbal support, thanks to the connectivity between the call center and the web server, call center members of the call center support team will also know exactly what the user is doing as he or she completes a form and can help online. This can be accomplished in the GSM network because the two channels, voice and GPRS data, are already jointly used in a mobile phone.

Thus the use of online guidance, as provided for in the present invention, gives a user as much help as needed to enter the necessary data in an online form 555. Until the online form is completed 560, the user always has the above described options of "listen to explanation" and "get live support". When the online form is completed or finished 560, the data is sent to the data server 565 and the data connection is closed 570. The method concludes with an end step 575. The present invention thus not only permits a user to obtain assistance while completing a form or furnishing other information online, but it also enables the call center to know at any given time what the user is doing on the form. Of course, the voice connection can be closed simultaneously with the close of the data connection, but in some cases it may be preferably to transmit a voice message confirming the transaction prior to terminating the voice connection.

The invention present invention increases the confidence level of a user while going through and completing online forms, because the user is connected continuously to the call center and readily obtains the appropriate voice guidance.. Therefore, the probability of users successfully completing online forms is significantly increases. The present invention can be successfully implemented without requiring Companies to significantly modify their web site's existing HTML content in order to implement the invention. In most cases the only addition required will be the addition of the two buttons described above to provide the functions of "listen to explanation" and "get live support."

Another embodiment of the present invention provides for a communications system made up of a communications device, in particular a mobile communications device, a data server and a call center unit, where the unit is composed of at least a computer and a communication terminal, wherein (i) the communication device is connected via a voice connection to the communications terminal; (ii) the communication device is connected via a first data connection to the data server; and (iii) the computer is connected via a second data connection to the data server.

Many companies already have large call support centers and also provide web pages to interested parties related to their business activities. For example, insurance companies usually provide online insurance application forms on their web sites. Implementation of the above described invention for such companies is easily accomplished connecting their web server to their call center and by employing the appropriate software applications to implement the invention.

Because the present invention is easily implemented by means of software, a digital storage medium, such as a microchip, is also within the intended scope of the present invention. Such a storage medium will include electronically readable control instructions for a data server adapted to execute the methods described herein.

In one embodiment, the invention provides for a digital storage medium, that has electronically readable control instructions for controlling a data server adapted to execute a process comprising the steps of establishing a data connection with a communication device in response to a request received from a call center, exchanging data with the communication device, and forwarding at least parts of the data received from the communication device to the call center.

In another embodiment, the invention provides for a digital storage medium, which comprises electronically readable control instructions for controlling a communications device adapted to execute a process comprising the steps of establishing a voice connection with a call center and establishing a data connection with a data server parallel to the voice connection. Thus, a communication device, in particular a mobile communication device, adapted for parallel handling of at least one voice and one data connection, lies within the intended scope of the present invention.

Although the present invention has been described in detail, those skilled in the art should understand that they can make various changes, substitutions and alterations herein without departing from the spirit and scope of the invention in its broadest form.

## Claims

1. A method of connecting with a call center, comprising:
establishing a voice connection between a call center and a communications device; and
establishing a data connection, parallel to said voice connection, between said communications device and a data server accessible to said call center.

2. The method as recited in Claim 1 wherein said data server is a web server connected to the Internet.

3. The method as recited in Claim 1 further comprising causing stored pre-recorded voice messages to automatically transmit over said voice connection in response to a voice or key command input by a user of said communications device.

4. The method as recited in Claim 1 wherein said communication device is selected from the group consisting of a mobile phone, a PDA, an MDA, a Pocket PC and a Tablet PC.

5. The method as recited in Claim 1 further comprising said communications device transmitting data to said data server to cause at least one voice message to be transmitted to said communications device.

6. The method as recited in Claim 1 further comprising said communications device transmitting data to said data server to signal said call center that the user of said communications device requests a call center person to join the voice connection.

7. A communications system, comprising
a communications device;
a data server; and
a call center unit consisting of at least one computer and one communications terminal, wherein;
said communications device is connected via a voice connection to said communications terminal;
said communications device is connected via a first data connection to said data server, and
said computer is connected via a second data connection to said data server.

8. The communications system as recited in Claim 7 wherein said communications device is a mobile communications device.

9. A communications device comprising;
a voice connection means; and
a data connection means, said communications device adapted to handle, in parallel, at least one voice connection and at least one data connection.

10. The communications device as recited in Claim 9 wherein said communications device is a mobile communications device.
